Europäisches Patentamt

European Patent Office

Office européen des brevets

(11) Veröffentlichungsnummer: **0 078 908**

**A2**

(12) # EUROPÄISCHE PATENTANMELDUNG

(21) Anmeldenummer: **82108802.8**

(22) Anmeldetag: **23.09.82**

(51) Int. Cl.³: **G 05 F 1/20**

(30) Priorität: **24.10.81 DE 3142269**

(43) Veröffentlichungstag der Anmeldung:
**18.05.83 Patentblatt 83/20**

(84) Benannte Vertragsstaaten:
**AT BE CH DE FR GB IT LI LU NL SE**

(71) Anmelder: **Thyssen Industrie AG**
**Am Thyssenhaus 1**
**D-4300 Essen(DE)**

(72) Erfinder: **Hienz, Georg, Dipl.-Ing.**
**Haderunstrasse 21**
**D-8000 München 70(DE)**

(72) Erfinder: **Oprendek, Bernhard, Dr. Ing.**
**Neubeuernerstrasse 8**
**D-8000 München 21(DE)**

(74) Vertreter: **Siebert . Grättinger & Bockhorni**
**Postfach 1649 Almeidaweg 35**
**D-8130 Starnberg (München)(DE)**

(54) Stelltransformator.

(57) Bei einem Stelltransformator mit elektronischer Steuerung und einer Mehrzahl von Wicklungen, die jeweils über Halbleiterschalter an gemeinsame Stromschienen angeschlossen sind, wird der Sekundärkreis des Transformatorteils durch die genannten Wicklungen gebildet, so daß der Transformator eine erhöhte Anzahl von Zwischenphasen erzeugt. Diese sind direkt mit Halbleiterschaltern einzeln mit einer der jeweils gewünschten Anzahl der Ausgangsphasen gleichen Anzahl von Stromschienen verbunden. Die Regelung der Spannung, Phasenlage und Frequenz wird durch Ansteuerung der Halbleiterschalter mittels Dauerimpulsen oder mittels zur Netzfrequenz synchroner oder assynchroner Steuer- bzw. Schaltimpulse erreicht.

Fig.-2-

EP 0 078 908 A2

-1-

## Stelltransformator

Die Erfindung bezieht sich auf einen Stelltransformator mit elektronischer Steuerung und einer Mehrzahl von Wicklungen, die jeweils über Halbleiterschalter $(S_{1a}...S_{np})$ an gemeinsame Stromschienen $(S_{sa}... S_{sp})$ angeschlossen sind.

Ein Stelltransformator mit elektronischer Steuerung wird in DP-AS-2609 697 beschrieben. Durch Halbleiterschalter und durch eine aufwendige Kern- und Wicklungsausführung wird dabei eine annähernd stufenlose Steuerung der Ausgangsspannung erreicht.

Transformatoren, die nur die Stufensteuerung der Phasenlage erlauben, sind als "Längs- und Quertransformatoren" in - Bödefeld/ Sequenz - Elektrische Maschinen - Springer Verlag Wien-New York, 1971 - Abschnitt 1.5.3/S. 86 - beschrieben. Ferner sind Drehfeldtransformatoren - (Bödefeld/Sequenz - Elektrische Maschinen - Springer-Verlag Wien - New York, 1971 - Abschnitt 3.9/S. 297) bekannt, die ähnlich einer rotierenden Maschine ausgeführt sind und die durch das Verdrehen des festliegenden Läufers eine kontinuierliche Steuerung der Phasenlage erlauben. Transformatoren zur Änderung der Anzahl der Ausgangspahsen sind als Stromrichter-Transformatoren oder als Drehfeld-Transformatoren mit Phasenzahlumformung bekannt (Bödefeld/Sequenz - Elektrische Maschinen - 1971, Abschnitt 1.5.4/ S. 89 und Abschnitt 3.12.1/S. 312). Diese erlauben das Erreichen einer einzigen, durch die aufwendige Kern- und Wicklungsausführung festgelegten Phasenzahl.

Ferner sind Transformatoren zur statischen Frequenzumformung bekannt, die mit ungünstigem Wirkungsgrad und Leistungsfaktor eine Verdoppelung oder Verdreifachung der Eingangsfrequenz erlauben (Bödefeld/ Sequenz - Elektrische Maschinen - Abschnitt 1.6./S. 94). Statische Frequenzumformer , die aus einem separatem Transformator und einem separatem Thyristor-Frequenzumrichter bestehen, sind in "K.Heumann -Leistungselektronik - Verlag Teubner Stuttgart 1975, Abschnitt 7.2.2. und Abschnitt 8.3" beschrieben.

Gemäß DP-AS-27 07 169 ist eine Lösung, die nur zur Frequenzumrichtung dient, vorgezeigt, bestehend aus einem separatem Transformator mit mehreren in Stern und Dreieck geschalteten Sekundärwicklungen und mit mehreren separaten steuerbar ausgeführten Thyristor-Drehstrombrückenschaltungen.

Sämtliche angeführte Lösungen erlauben nur das Aussteuern eines Parameters oder bestehen aus getrennten aufwendigen Bauteilen und können nicht sämtliche Ausgangsgrößen einzeln oder gemeinsam, beliebig steuern.

Der vorliegenden Erfindung liegt die Aufgabe zugrunde, einen kompakten Stelltransformator mit elektronischer Steuerung zu schaffen, zu annähernd stufenloser, einzelner oder gemeinsamer Regelung, auch unter Last, von Spannung, Phasenlage und Frequenz und zur Erreichung einer, von den Sekundärwicklungen annähernd unabhängigen, beliebigen Ausgangsphasenzahl.

Diese Aufgabe wird nach dem Vorschlag der Erfindung dadurch gelöst, daß der Transformator durch seine Sekundärwicklungen eine erhöhte Anzahl von Zwischenphasen erzeugt. Diese sind direkt mit Halbleiterschaltern einzeln mit jeder der gewünschten Ausgangsphasen gleichen Anzahl von Stromschienen verbunden. Durch die bauliche Vereinigung werden als Starkstromanschlüsse nur die primären und sekundären Starkstrom-Hauptanschlüsse durch das Gehäuse nach außen geführt. Die Halbleiterschalter sind einzeln ansteuerbare Triacs, antiparallele Thyrsitoren oder Leistungstransistoren, die entsprechend natürlich oder zwangskommutiert werden. Die gewünschte Regelung der Spannung, Phasenlage und Frequenz wird durch die Ansteuerung der Halbleiterschalter mittels Dauerimpulsen oder mittels der Netzfrequenz synchronen oder asynchronen Steuer- bzw. Schaltimpulsen erreicht.

Vorteilhafte Ausgestaltungen und Weiterbildungen ergeben sich aus den Unteransprüchen.

Gegenüber den angeführten, bekannten Geräten bildet der erfindungsgemäße Stelltransformator eine einfache, kompakte Baueinheit mit der kleinstmöglichen Anzahl aus dem Gehäuse ausgeführten Starkstrom-Hauptanschlüssen und erlaubt nicht nur das Erreichen einer beliebigen Anzahl von Ausgangsphasen, sondern auch bei gutem Wirkungsgrad und Leistungsfaktor, eine annähernd stufenlose Steuerung einzeln oder gemeinsam, von Spannung, Phasenlage und Frequenz.

Nachfolgend werden Ausführungsbeispiele und Wirkungsweise der Erfindung an Hand der Zeichnungen beschrieben. Es zeigt:

Fig. 1   das Gesamtschaltbild des Stelltransformators;

Fig. 2   eine Ausführung des Transformators mit einem Manteljochkern;

Fig. 3   eine Ausführung als Drehfeldtransformator

Fig. 4   eine Ausführung als Dreischenkel-Kerntransformator

Fig. 5   die Sekundärschaltung (5.a) und das dazugehörige Stern-Zeigerdiagramm (5b);

Fig. 6   die Polygon-Sekundärschaltung (6a) und das dazugehörige Zeigerdiagramm (6b);

Fig. 7   die Primärschaltung als Parallel- (7a) oder als Reihenschaltung (7b)

Fig. 8   das Zeigerdiagramm bei Spannungssteuerung;

Fig. 9   das Zeigerdiagramm bei Phasenlagesteuerung

Fig. 10  das Zeigerdiagramm bei Frequenzsteuerung der Phasenspannung;

Fig. 11  das zu Fig. 10 gehörige Verhältnis der Frequenzen und

Fig. 12  das Zeigerdiagramm bei gemeinsamer Frequenz- und Amplitudensteuerung der verketteten Spannung.

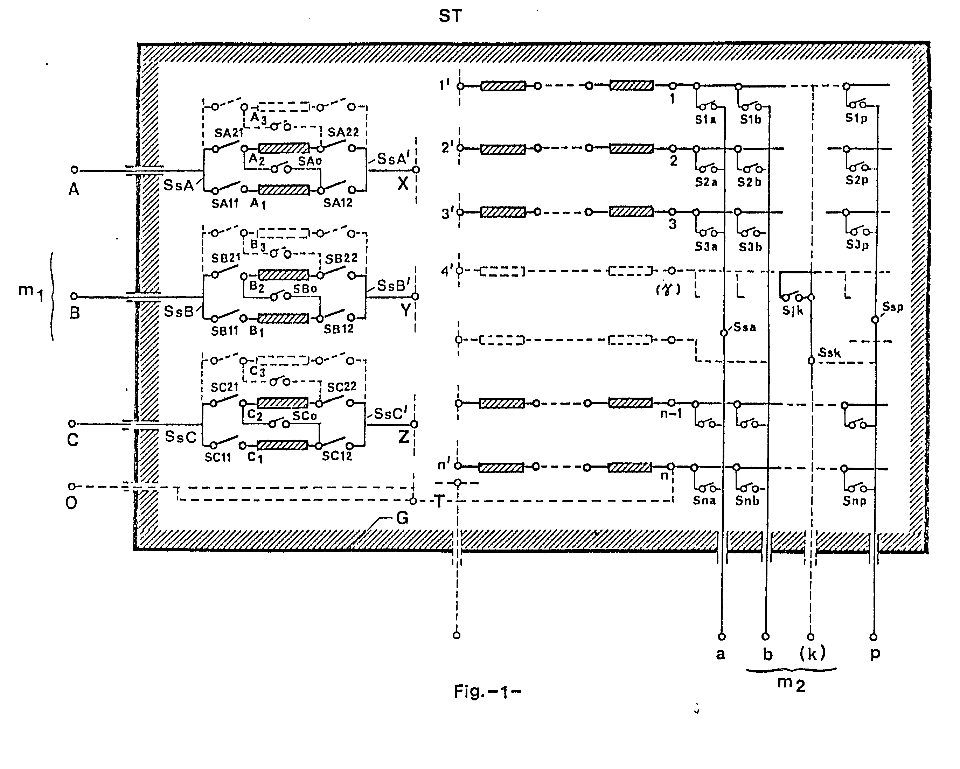

In Fig. 1 ist das Gesamtschaltbild des Stelltransformators ST zu sehen. Durch das Gehäuse G sind nur die $m_1$ Eingangsphasen mit ihren Starkstromanschlüssen A, B, C, (o), und die $m_2$ Ausgangsphasen mit ihren Starkstromanschlüssen a, b,...p,(o) ausgeführt.

Jede Primärphase AX, BY, CZ des Transformatorteils T ist in Einzelwicklungen unterteilt $A_1, A_2, \ldots B_1, B_2 \ldots$ und mittels der Halbleiterschalter $S_{A11}$, $S_{A12}$, $S_{A21}$, $S_{A22}$, $S_{B11} \ldots S_{B22}$, $S_{C11} \ldots S_{C22}$ in parallel oder mittels der Halbleiterschalter $S_{Ao}$, $S_{Bo}$, $S_{Co}$ in Reihe an die primären Stromschienen $S_{sA}$, $S_{sA}$, $S_{sB}$, $S_{sB}$, $S_{sC}$, $S_{sC}$, angeschlossen. Die Sekundärwicklungen bilden eine Anzahl n von Zwischenphasen, wobei jeder Strang 11', 22', ...j,'nn' mittels seiner Halbleiterschalter $S_{1a}$, $S_{1b} \ldots S_{1p}$, $S_{2a} \ldots S_{2p}$, $S_{jk}$, $S_{na} \ldots S_{np}$ an jede der Ausgangsphasenanzahl $m_2$ entsprechenden Stromschienen $S_{sa}$, $S_{sb}, \ldots S_{sk} \ldots, S_{sp}$ angeschlossen ist.

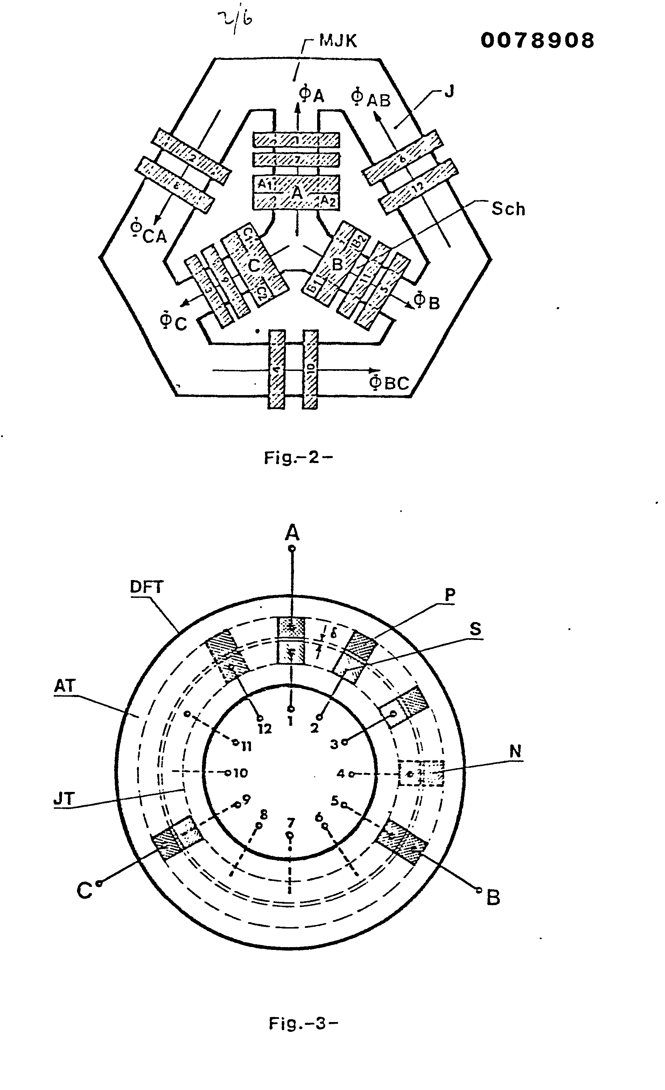

In Fig. 2 ist ein Ausführungsbeispiel für einen Transformator gegeben, der zur Verminderung des Oberwellengehaltes mit 12 Zwischenphasen und mit einem symmetrischen Manteljochkern ausgeführt ist. Auf jedem Schenkel (Sch) sitzen, den Flüssen $\emptyset_A$, $\emptyset_B$, $\emptyset_C$ entsprechend, die 3 Primärwicklungen, die zusammen ein 12-strängiges (1, 2 ...12) System von Zwischenphasen bilden.

Fig. 3 zeigt eine für eine höhere Zwischenphasenzahl besonders günstige Lösung als Drehfeldtransformator DFT, mit in Nuten N eines zylinderförmigen Blechpaketes eingelegten Wicklungen. Die Primärwicklung P mit den Eingängen A, B, C liegen in den Nuten, in einem äußeren Zylinderteil AJ, während die Sekundärwicklung mit den Ausführungen 1, 2,...11,12 sich in den Nuten im Bereich im inneren Zylinderteil JT befinden. Zur Verminderung des Streuflusses kann der äußere Zylinderteil AT vom inneren Zylinderteil JT, wie hier gezeigt, durch einen Luftspalt getrennt sein.

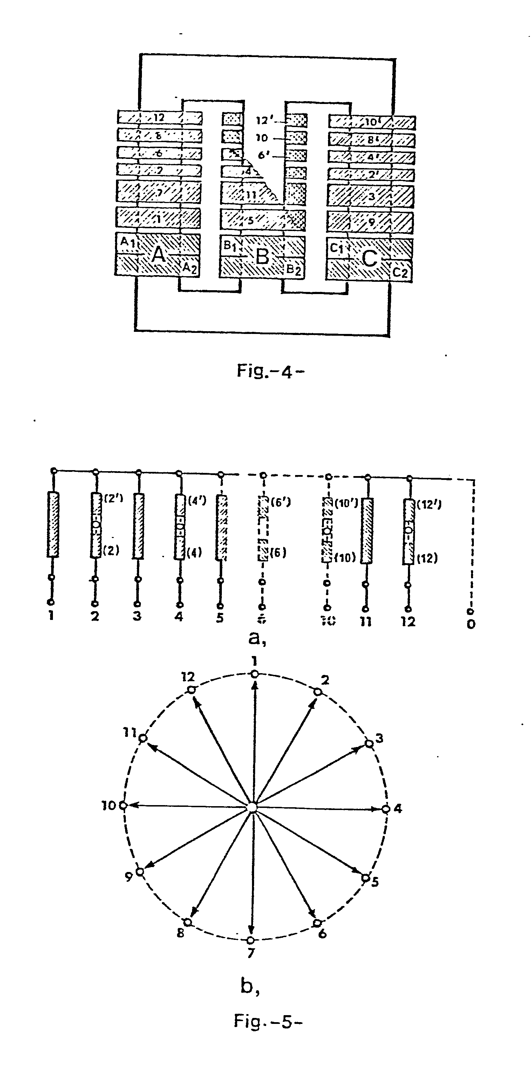

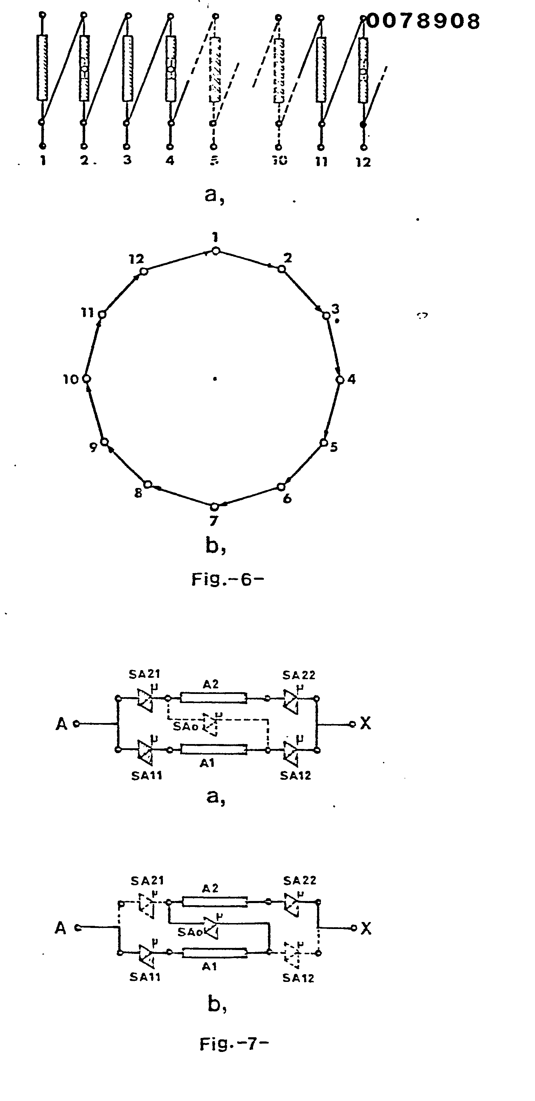

In Fig. 4 ist eine andere Lösung für einen Dreischenkelkerntransformator mit 12 Zwischenphasen gezeigt. Die Primärwicklungen ($A_1$, $A_2$), ($B_1$, $B_2$), ($C_1$, $C_2$) liegen je eine auf jedem Schenkel. Sechs Sekundärphasen (1, 7, 5, 11, 9, 3) werden durch 6 gleiche Wicklungen von denen je zwei auf einem Schenkel liegen gebildet. Die restlichen 6 Phasen (2,2', ... 12, 12') sind als 12 untereinander gleiche Wicklungen ausgeführt, wobei je zwei Wicklungen auf verschiedenen Schenkeln liegen. Eine Schaltung der Sekundärwicklungen nach Fig. 5a mit den Bezeichnungen der Fig. 2, Fig. 3 u. Fig. 4, ergibt eine Sternschaltung mit den Spannungen nach dem in Fig. 5b ersichtlichen Zeigerdiagramm. Die Schaltung der oben erwähnten Sekundärwicklungen nach Fig. 6a ergibt eine Polygonschaltung mit Spannungen nach dem in Fig. 6 b ersichtlichen Zeigerdiagramm.

Zur Grobsteuerung der Spannungsamplitude, zur Verbesserung des Verschiebefaktors, ohne zusätzliche Oberwellen der Spannungskurve und auch unter Last, werden zur Erhöhung der Spannung die Primäreinzelwicklungen jeder Phase in parallel geschaltet. In Fig. 7a sind die Einzelwicklungen $A_1$, $A_2$ mittels der Halbleiterschalter $S_{A11}$ - $S_{A12}$ und $S_{A21}$ - $S_{A22}$ parallel über ihre Stromschienen an die Klemmen A, X geschaltet. Zur Verminderung der Spannung werden die Einzelwicklungen in Reihe geschaltet. In Fig. 7b werden $A_1$ und $A_2$ über den Schalter $SA_0$ in Reihe zu den Klemmen A,X geschaltet. Die Halbleiterschalter werden mit Dauerimpulsen oder mit dem Stromnulldurchgang synchronen Impulsen angesteuert und erlauben ein problemloses Umschalten auch unter Last.

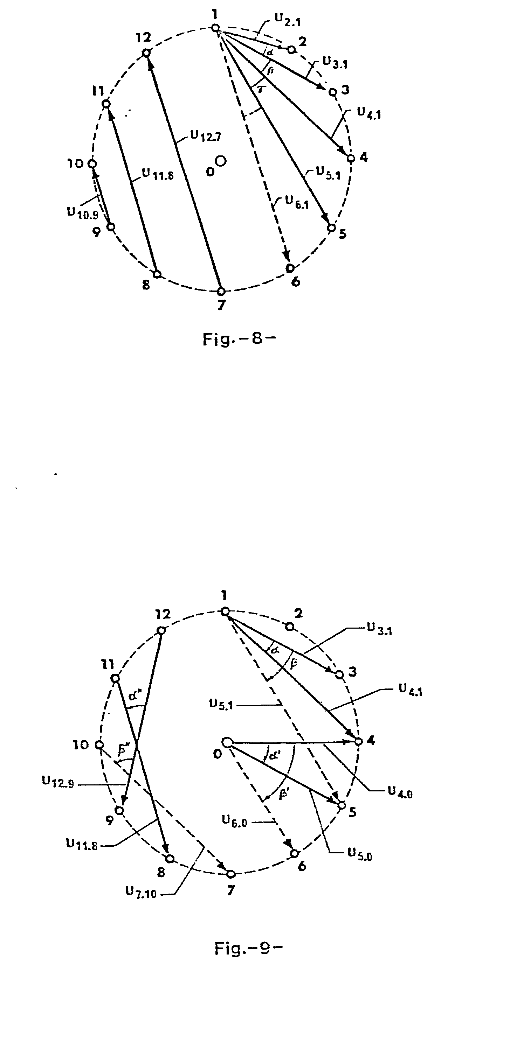

Eine Feinstufensteuerung der Amplitude und der Phasenlage einer verketteten Ausgangsspannung, unter Last und ohne zusätzliche Oberwellen. erhält man durch das Löschen eines stromführenden Schalters der Sekundärwicklungen und durch das Einschalten eines anderen. Nach Fig. 1, Fig. 5 und Fig. 6 würde die verkettete Spannung $U_{ab}$ mit $S_{a1}$ und $S_{b2}$ angesteuert, eine Spannung mit Größe und Phasenlage nach Fig. 8 und Fig. 9 von $U_{ab} = U_{2.1}$ ergeben. Durch Umschalten der Reihe nach auf die Schalter $S_{b3}$, $S_{b4}$, $S_{b5}$ würde die verkettete Spannung nach Fig. 8 $U_{ab} = U_{3.1}$, $U_{ab} = U_{4.1}$, $U_{ab} = U_{5.1}$, werden. Die Spannung verändert ihren Wert in kleinen Stufen und verändert ihre Phasenlage mit den Winkeln $\alpha$, $\beta$, $\gamma$. Eine kontinuierliche Steuerung der Amplitude und der Phasenlage einer verketteten Ausgangsspannung unter Last und mit kleinem Oberwellengehalt, sowie mit gutem Verschiebefaktor, wird durch eine zur Primärfrequenz synchronen Umschaltung mit einstellbarer Schaltdauer eines stromführenden Schalters auf einem nach Phasenlage nächstliegenden Halbleiterschalter erreicht. Mit den Bezeichnungen in Fig. 1, Fig. 5 und Fig. 6 folgt, daß bei Ansteuerung der Schalter $S_{a1}$ und $S_{b3}$ oder $S_{b4}$ die verkettete Spannung in Fig. 8 und Fig. 9 gleich $U_{ab} = U_{3.1}$ oder $U_{ab} = U_{4.1}$ würde. Durch synchrone Umschaltung erhält man einen Mittelwert zwischen $U_{3.1}$ und $U_{4.1}$, bzw. einen Zwischenwert von $\gamma$, abhängig von der relativen Einschaltdauer der beiden Halbleiterschalter.

Zur Amplitudensteuerung unter der Beibehaltung der Phasenlage werden beide Halbleiterschalter auf zwei andere von dieser Phasenlage entgegengesetzt gleichweit entfernte Halbleiterschalter umgeschaltet. Bei Ansteuerung von $S_{a10}$ und $S_{a9}$ erhält man gemäß Fig. 8 $U_{ab} = U_{10.9}$. Durch Umschalten auf $S_{a11}$ bzw. $S_{a8}$, oder auf $S_{a7}$ bzw. $S_{a12}$ erhält man nach Fig. 8 die Spannungen $U_{ab} = U_{11.8}$ bzw. $U_{ab} = U_{12.7}$, die alle andere Werte aber gleiche Phasenlage haben.

Eine Phasenlagesteuerung unter Beibehaltung der Amplitude der verketteten Ausgangsspannung wird ähnlicherweise erreicht, durch Umschalten der beiden stromführenden Schalter auf zwei der gewünschten Phasenlage entsprechenden im selben Sinne gleich weit entfernte Halbleiterschalter. Beim Ansteuern der Schalter $S_{a12}$ und $S_{b9}$ und Umschalten auf $S_{a11}$ bzw. $S_{b8}$ oder $S_{a10}$ bzw. $S_{b7}$ erhält man nach Fig. 9 die gleichen Spannungen $U_{ab} = U_{12.9} = U_{11.8} = U_{10.7}$, die aber um die Winkel $\alpha''$, $\beta''$ verschoben sind. Ebenso erhält man für die Phasenspannung eine Phasenlagesteuerung unter Beibehaltung der Amplitude durch das Umschalten des stromführenden Schalters der Sekundärwicklung auf einen in der gewünschten Phasenlage liegenden Schalter. So wird nach Fig. 1 die Spannung $U_{ko}$ bei Ansteuern der Schalter $S_{k4}$, $S_{k5}$, $S_{k6}$ nach Fig. 9 gleich mit $U_{a.o} = U_{4.o} = U_{5.o} = U_{6.o}$ aber mit den Winkeln $\alpha'$, $\beta'$, gegen $U_{4.o}$ verschoben.

Gleichzeitig kann man an den Sekundärklemmen so viele phasenverschobene Spannungen $U_{ko}$ erzielen, wie viele Stromschienen $S_{sk}$ vorgesehen sind. Daraus folgt, daß die Anzahl der Ausgangsphasen $m_2$ gleich ist mit der Anzahl p der sekundärseitig ausgeführten Stromschienen, d. h. $m_2 = p$.

Da eine Phasenlagensteuerung unter Beibehaltung der Amplitude möglich ist, erfolgt, daß eine stetige, gleichmäßige Veränderung der Phasenlage eine Steuerung der Ausgangsfrequenz bewirkt.

Zur Steuerung der Frequenz unter Beibehaltung der Amplitude der Phasenspannung wird der jeweils stromführende Schalter zur Primärfrequenz asynchron auf einen jeweils im gleichen Sinne liegenden Halbleiterschalter umgeschaltet.

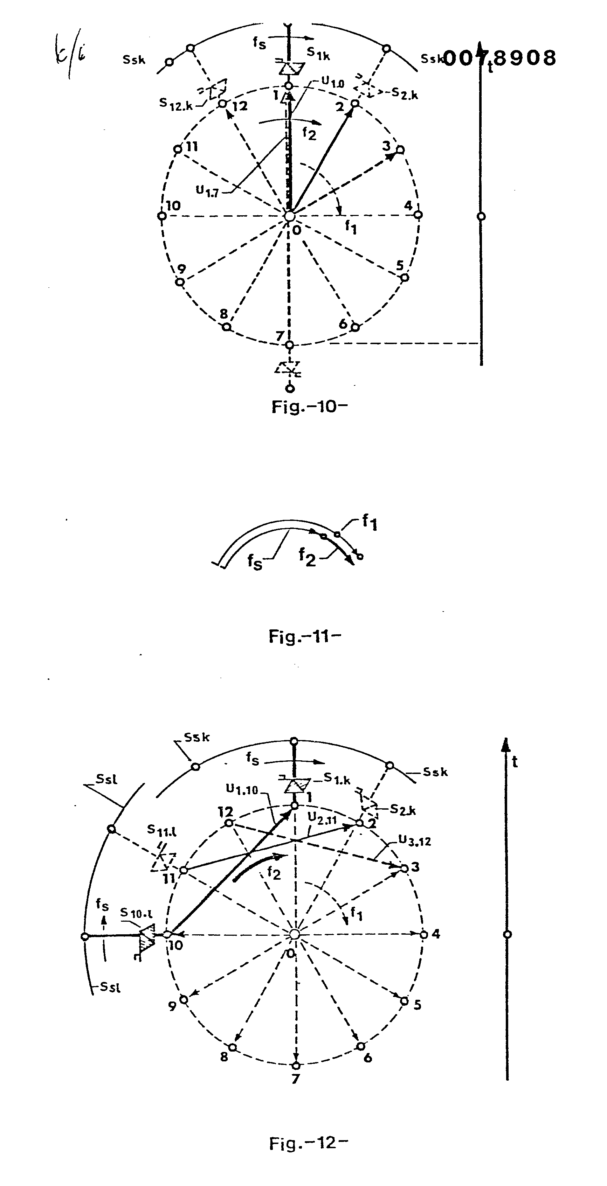

Wenn nach Fig. 1 und Fig. 10 zum Zeitpunkt $t = o$ der Schalter $S_{1k}$ leitend ist, so liegt an der Phase k die Spannung $U_{ko} = U_{1o}$ an, deren Momentanwert $u_{ko} = u_{1o}$ sich als Projektion des mit $f_1$ umlaufenden Zeigerdiagramms auf die Zeitachse t ergibt. Wenn nun die Umschaltfrequenz gleich Null ist ($f_s = o$), so bleibt immer nur ein Schalter – $S_{1k}$ – an die Stromschiene und an den Ausgang geschaltet. Hier tritt also die Spannung $U_{1k} = U_{1o}$ auf, mit der Frequenz $f_2 = f_1 - f_s = f_1$. Bei einer Umschaltfrequenz gleich der Netzfrequenz $f_s = f_1$ im Gegensinn der Phasenfolge, wird in Fig. 10 nach $t = 1/12\, f_s$ vom Schalter $S_{1k}$ auf $S_{12k}$ umgeschaltet. Inzwischen hat der Spannungszeiger 12 sich mit $f_1$ im Gegensinn um den gleichen Winkel gedreht und die Phasenlage 1 angenommen. So erhält die Klemmenspannung $U_{ko}$ über die Stromschiene $S_{sk}$ im Mittel immer den selben Momentanwert. Die Ausgangsfrequenz $f_2 = f_1 - f_s = f_1 - f_1 = o$ entspricht einem Gleichstromsystem.

Bei einer asynchronen Umschaltfrequenz, z. B. für $f_s = f_1/3$ wird nach $t = 1/12\, f_s$ vom Schalter $S_{1k}$ auf $S_{12k}$ umgeschaltet. Inzwischen hat der Spannungszeiger 12 sich im Gegensinn um einen 3-fach größeren Winkel gedreht und die Phasenlage 3 angenommen. Bei $f_s = o$ hätte sich die Spannung $U_{1k} = U_{1.0}$ mit $f_1$ in die Lage 4 gedreht, während sie nun bei $f_s = f_1/3$ die Lage 3 erreicht, sich also um einen 2/3 kleineren Winkel gedreht hat. Folglich ergibt sich eine Ausgangsfrequenz von $f_2 = f_1 - f_s = f_1 - f_1/3 = 2f_1/3$. So erhält man an den Ausgangsklemmen eine Phasenspannung $U_{ko}$ mit annähernd gleicher Amplitude, aber mit einer über die Umschaltfrequenz $f_s$ steuerbare Ausgangsfrequenz $f_2 = f_1 - f_s$ (Fig. 11). Eine Verschiebung der Phasenlage der Schaltimpulse bewirkt eine entsprechende Phasenverschiebung der frequenzgeregelten Ausgangsspannung.

Bei Frequenzsteuerung unter Beibehaltung der Amplitude einer verketteten Ausgangsspannung werden die beiden zugeordneten stromführenden Halbleiterschalter, bezüglich der Primärfrequenz asynchron auf jeweils zwei im gleichen Sinn liegende Halbleiterschalter umgeschaltet. Zum Zeitpunkt $t = o$ ist z. B. die Zwischenphase 1 mittels des Halbleiterschalters $S_{1k}$ an die Schiene $S_{sk}$ (Fig. 10) und die Zwischenphase 7 mittels dem Halbleiterschalter $S_{7.1}$ an die Stromschiene $S_{s1}$ angeschlossen. Diese Schalter werden mit der Umschaltfrequenz f auf die Schalterpaare $S_{12k} - S_{61}$; $S_{11k} - S_{51}$; ... umgeschaltet.

In derselben Weise wie bei der Phasenspannung $U_{ko}$ erhält man so eine verkettete Spannung mit annähernd gleicher Amplitude, aber mit einer über die Umschaltfrequenz $f_s$ steuerbaren Ausgangsfrequenz $f_2 = f_1 - f_s$.

Bei Frequenzsteuerung wird eine gleichzeitige Grobsteuerung der Spannungsamplitude, ohne zusätzliche Oberwellen und mit gutem Verschiebefaktor durch die Reihen- und Parallelschaltung der Einzelprimärwicklungen (Fig. 7) erreicht.

Eine gleichzeitige Feinstufensteuerung der Spannungsamplitude, ohne zusätzliche Oberwellen und mit gutem Verschiebefaktor wird durch die Veränderung des Phasenabstandes zwischen den beiden zugehörigen stromführenden Schaltern erreicht. Wenn die verkettete Klemmenspannung $U_{k1}$ den Wert $U_{k1} = U_{1.7}$ in Fig. 10 hatte , so wird durch die Veränderung des Phasenabstandes (Fig. 12) von 1-7 auf 1-10 die Spannung auf den Wert $U_{k1} = U_{1.10}$ herabgesetzt, wobei die frequenzgeregelte Klemmenspannung, so wie schon beschrieben, mit $f_2 = f_1 - f_s$ die Phasenlagen 1-10, 2-11, 3-12, ... durchläuft.

Eine kontinuierliche Steuerung der Spannungsamplitude mit kleinem Oberwellengehalt und gutem Verschiebefaktor wird durch das Oberspringen in jeder Halbperiode von einem oder mehreren, maximal spannungsführenden Schaltern erreicht.

Da jeder Teil vor und nach dem Oberspringen einen symmetrischen Sinusbogen bildet, ergibt sich ohne das fehlende Mittelstück und durch das zeitliche Zusammenrücken eine aus 2 symmetrischen Sinusbögen gebildete Spannung mit verkleinerter Amplitude. Eine annähernd stetige Veränderung wird durch das Steuern des Intervalls, in der ein oder mehrere Schalter übersprungen werden, bewirkt.

Patentansprüche:

1. Stelltransformator (ST) mit elektronischer Steuerung und einer Mehrzahl von Wicklungen, die jeweils über Halbleiterschalter $(S_{1a}...S_{np})$ gemeinsame Stromschienen $(S_{sa}...S_{sp})$ angeschlossen sind, gekennzeichnet durch die folgenden Merkmale:

a) der Transformatorteil (T) ist zur Erzeugung von Zwischenphasen durch Vervielfältigung der Eingangspahsenzahl $(m_1)$ geeignet ausgebildet;

b) es ist eine der Anzahl der Ausgangspahsen $(m_2)$ gleiche Anzahl von Stromschienen $(S_{sa}...S_{sp})$ vorgesehen;

c) die genannte Mehrzahl von Wicklungen bildet den Sekundärkreis des Transformatorteiles (T) und entsprechend der Ausgangsphasenzahl $(m_2)$ sind ein- oder mehrere Stromschienen $(S_{sa}...S_{sp})$, jede über Halbleiterschalter $(S_{1a}...S_{np})$, mit jeder Sekundärwicklung verbunden;

d) die Halbleiterschalter des Sekundärkreises $(S_{1a}...S_{np})$ und die Stromschienen $(S_{sa}...S_{sp})$ sind in einem Gehäuse (G) mit dem Transformatorteil (T) baulich vereinigt, derart, daß als Starkstromanschlüsse nur die primären (A,B,C) und sekundären (a,b...p) Hauptanschlüsse durch das Gehäuse (G) nach außen geführt sind.

e) die Steuerung arbeitet sowohl mit gegenüber der Netzfrequenz synchronisierten und verschiebbaren Steuerimpulsen oder mit Dauerimpulsen zur Veränderung der Spannungsamplitude und -phasenlage, als auch mit gegenüber der Netzfrequenz asynchronen Steuerimpulsen zur Veränderung der Ausgangsfrequenz bei konstanter oder veränderbarer Spannungsamplitude und -phasenlage.

2.  Stelltransformator nach Anspruch 1,

    dadurch gekennzeichnet,

    daß der Transformatorteil (T) zur Verminderung des Oberwellengehalts als 12-Phasentransformator mit drei Primär-
    wicklungen ($A_1$,$A_2$...$C_1$,$C_2$) und zwölf Sekundärwicklungen mit
    einem symmetrischen Manteljochkern (MJK) ausgeführt ist (Fig.2).

3.  Stelltransformator nach Anspruch 2,

    dadurch gekennzeichnet,

    daß der Manteljochkern (MJK) drei sternförmig symmetrische
    zusammenlaufende Schenkel (Sch) umfaßt, welche durch drei
    gleiche Joche (J) verbunden sind, wobei die drei Primärwicklun-
    gen ($A_1$,$A_2$...$C_1$,$C_2$) auf je einem Schenkel und je zwei Sekundärwicklungen auf je einem Schenkel (Sch) und je einem Joch (J)
    angeordnet sind.

4.  Stelltransformator  nach Anspruch 1,

    dadurch gekennzeichnet,

    daß der Transformatorteil als Drehfeldtransformator (DFT) mit
    in Nuten (N) eines zylinderförmigen Blechpaketes eingelegten
    Wicklungen ausgebildet ist (Fig. 3).

5.  Stelltransformator nach Anspruch 4,

    dadurch gekennzeichnet,

    daß das Blechpaket aus je einem feststehenden äußeren (AT) und
    inneren Zylinderteil (JT) zusammengesetzt ist, welche durch
    einen geringen Luftspalt (δ) getrennt sind, wobei in demselben Zylinderteil  entweder  alle Primär- (P) oder alle Sekundär-
    (S) wicklungen untergebracht sind.

6.  Stelltransformator nach Anspruch 1,

    dadurch gekennzeichnet,

    daß der Transformatorteil (T) als Dreischenkel-Kerntransformator
    ausgebildet ist, mit einer 12-phasigen Sekundärwicklung, wovon
    sechs Phasen durch sechs untereinander gleiche Wicklungen
    gebildet sind,  ·n denen je zwei auf einem Schenkel liegen, die
    restlichen sechs Phasen durch zwölf untereinander gleiche Wicklungen gebildet sind, von denen je zwei auf verschiedenen Schenkeln liegen und in Reihe geschaltet sind (Fig. 4).

7. Stelltransformator nach Anspruch 1,
dadurch gekennzeichnet,
daß die Halbleiterschalter ($S_{1a}...S_{np}$; $S_{A11}...S_{C22}$), einzeln
ansteuerbare Triacs, antiparallele Thyristoren oder antiparallele Leistungstransistoren sind, die entsprechend natürlich- oder zwangskommutiert werden.

8. Stelltransformator nach Anspruch 1,
dadurch gekennzeichnet,
daß die Primärwicklung jeder Phase aus einer $2^n$-fachen Anzahl
von Einzelwicklungen ($A_1,A_2...C_1, C_2$) besteht, welche durch
Halbleiterschalter $S_{A11}...S_{C22}$) an gemeinsame Stromschienen
($S_{sA}...S_{sc}$) angeschlossen und deren Anfang jeweils mit dem
Ende der folgenden Einzelwicklung, verbunden sind. (Fig. 7)

9. Stelltransformator nach Anspruch 8,
dadurch gekennzeichnet,
daß zur Grobsteuerung der Spannungsamplitude, bei gutem Verschiebefaktor, ohne zusätzliche Oberwellen der Spannungskurve und
auch unter Last, die Einzelwicklungen ($A_1...C_2$) jeder Primärphase mittels Halbleiterschalter ($S_{A11}...S_{C22}$) über Dauerimpulse
oder mit dem Nulldurchgang des Primärstromes synchronen Impulsen in Reihe oder parallel schaltbar sind (Fig. 7).

10. Stelltransformator nach Anspruch 1,
dadurch gekennzeichnet,
daß zur Feinstufensteuerung der Amplitude und der Phasenlage
einer verketteten Ausgangsspannung, unter Last und ohne zusätzliche Oberwellen einer der stromführenden Schalter der
Sekundärwicklung gelöscht und ein anderer leitend wird (Fig.8).

11. Stelltransformator nach Anspruch 1,
dadurch gekennzeichnet,
daß zur kontinierlichen Steuerung der Amplitude und der Phasenlage einer verketteten Ausgangsspannung, unter Last und mit
kleinem Oberwellengehalt, sowie mit gutem Verschiebefaktor, einer der stromführenden Halbleiterschalter durch zur Primärfrequenz synchrone Ansteuerung bei einstellbarer Einschaltdauer mit einem nach Phasenlage nächstliegendem Halbleiterschalter ständig wechselt (Fig.8).

12. Stelltranformator nach den Ansprächen 10 oder 11,
    dadurch gekennzeichnet,
    daß bei der Amplitudensteuerung unter Beibehaltung der Phasenlage beide stromführende Halbleiterschalter auf zwei andere
    von dieser Phasenlage entgegengesetzt gleich weit entfernte
    Halbleiterschalter umgeschaltet werden (Fig. 8).

13. Stelltranformator nach den Ansprüchen 10 oder 11,
    dadurch gekennzeichnet,
    daß bei der Phasenlagensteuerung unter Beibehaltung der Ampli-
    -tuden der verketteten Ausgangsspannung beide stromführende
    Halbleiterschalter auf zwei der gewünschten Phasenlage entsprechenden, von dieser Phasenlage im selben Sinne gleich weit
    entfernte Halbleiterschalter umgeschaltet werden (Fig.9).

14. Stelltranformator nach den Ansprüchen 10 oder 11,
    dadurch gekennzeichnet,
    daß bei der Phasenlagensteuerung unter Beibehaltung der Amplitude der Phasenspannung gegenüber dem Sternpunkt der jeweils
    stromführende Schalter der Sekundärwicklung gelöscht und der
    in der gewünschten Phasenlage liegende Schalter leitend wird
    (Fig. 9).

15. Stelltransformator nach Anspruch 1,
    dadurch gekennzeichnet,
    daß zur Steuerung der Frequenz unter Beibehaltung der Amplitude der Phasenspannung, der stromführende Schalter asynchron,
    bezüglich der Primärfrequenz auf jeweils im gleichen Sinne
    liegende Halbleiterschalter umgeschaltet wird (Fig. 10).

16. Stelltransformator nach Anspruch 1,
dadurch gekennzeichnet,
daß zur Steuerung der Frequenz unter Beibehaltung der Amplitude der verketteten Spannung beide stromführende Halbleiterschalter asynchron, bezüglich der Primärfrequenz auf jeweils im gleichen Sinn liegenden Halbleiterschalter umgeschaltet werden (Fig. 10).

17. Stelltransformator nach Anspruch 16,
dadurch gekennzeichnet,
daß zusätzlich, zur Feinstufensteuerung der Spannungsamplitude, ohne zusätzliche Oberwellen und ohne Verminderung des Verschiebefaktors, der Phasenabstand der beiden stromführenden Schalter verändert wird (Fig. 12).

18. Stelltransformator nach Anspruch 15 oder 16,
dadurch gekennzeichnet,
daß zusätzlich, zur kontinuierlichen Steuerung der Spannungsamplitude mit kleinem Oberwellengehalt und mit gutem Verschiebefaktor, in einer jeden Halbperiode der Ausgangsfrequenz einer und mehrere maximal-spannungsführende Schalter in einem bestimmbaren Intervall übersprungen werden.

Fig.-1-

2/6

0078908

Fig.-2-

Fig.-3-

3/6

0078908

Fig.-4-

Fig.-5-

a,

b,

4/6

0078908

a,

b,

Fig.-6-

SA21    A2    SA22

A ○                    ○ X

SAo

SA11    A1    SA12

a,

SA21    A2    SA22

A ○                    ○ X

SAo

SA11    A1    SA12

b,

Fig.-7-

Fig.-8-

Fig.-9-

Fig.-10-

Fig.-11-

Fig.-12-